# EUROPEAN PATENT SPECIFICATION

(11) **EP 3 882 725 B1**
(45) Date of publication and mention of the grant of the patent: **29.01.2025**
(21) Application number: 21163721.0
(22) Date of filing: 19.03.2021
(51) Int. Cl.: G05B 19/042, B60W 50/02, B60W 60/00, G07C 5/08

(54) **METHOD AND SYSTEM FOR REAL-TIME AND RELIABLE AUTONOMOUS VEHICLE FAULT DIAGNOSIS AND PROTECTION**
VERFAHREN UND SYSTEM FÜR ZUVERLÄSSIGE FEHLERDIAGNOSE IN ECHTZEIT UND SCHUTZ FÜR AUTONOME FAHRZEUGE
PROCÉDÉ ET SYSTÈME DE DIAGNOSTIC ET DE PROTECTION EN TEMPS RÉEL ET FIABLE DES DÉFAUTS D'UN VÉHICULE AUTONOME

(30) Priority: 20.03.2020 CN 202010200564
(43) Date of publication of application: 22.09.2021
(73) Proprietor: Beijing IDRIVERPLUS Technology Co., Ltd., Beijing (CN)
(72) Inventor: CUI, Shiwei, Beijing, 102206 (CN); ZENG, Zicheng, Beijing, 102206 (CN); PAN, Hao, Beijing, 102206 (CN); ZHANG, Fang, Beijing, 102206 (CN); LI, Xiaofei, Beijing, 102206 (CN); ZHANG, Dezhao, Beijing, 102206 (CN); WANG, Xiao, Beijing, 102206 (CN); HUO, Shuhao, Beijing, 102206 (CN)
(74) Representative: Dantz, Jan Henning

(56) References cited:
- US-A1- 2019 064 803
- US-A1- 2019 066 409
- US-A1- 2020 074 771

## Description

### TECHNICAL FIELD

The present disclosure relates to autonomous vehicle fault diagnosis technologies in the field of autonomous vehicle safety monitoring, and in particular, relates to a method and a system for real-time and reliable autonomous vehicle fault diagnosis and protection.

### TECHNICAL BACKGROUND

As a field with the fastest development and the greatest prospects among the intelligent network connection technologies, the safety in the autonomous vehicle field gains more and more attention, and thus the design of a complete fault diagnosis system is particularly important. However, the fault diagnosis technology for autonomous vehicles which are of an emerging field is unmatured, meanwhile a fault diagnosis system based on the traditional electronically-controlled vehicle only involves the fault monitoring for the vehicle control modules (e.g. lower-layer vehicle control modules), but is ineffective for the fault diagnosis of the control, perception, positioning and decision modules that are important to the autonomous vehicle technology.

Chinese patent application No. CN201110026142.1 titled "MULTIFUNCTIONAL AND COMPREHENSIVE FAULT DIAGNOSIS SYSTEM FOR ELECTRONICALLY CONTROLLED VEHICLE" discloses a multifunctional and comprehensive fault diagnosis system for electronically-controlled vehicle, which includes three components of an on-vehicle network, a Vehicle Communication Interface (VCI) system and a Personal Computer (PC) diagnosis software, and the system may operate in an off-line mode in which functions of reading fault codes, clearing fault codes, reading frozen frames, reading data streams, reading module information and so on can be performed and an on-line mode in which fault diagnosis can be performed on multiple protocols. However, the patent application No. CN201110026142.1 relates to the fault diagnosis of merely the on-vehicle hardware of the traditional electronically-controlled vehicles. Since an autonomous vehicle system includes an autonomous vehicle brain composed of positioning, perception, decision and control modules in addition to the traditional vehicle controllers, the traditional vehicle fault diagnosis system is not suitable for the autonomous vehicle system.

As another example, US 2020/0074771 A1 discloses a method for processing vehicle fault, apparatus, device, and storage medium, in methods for processing vehicle fault, by isomorphically establishing a first vehicle fault processing device and a second vehicle fault processing device in an unmanned vehicle, monitoring a main system of the vehicle in real time, and sharing parameter data information of the main system obtained respectively by the two vehicle fault processing devices, so that both of them may obtain consistent fault results and perform control according to respective control authorities, which not only effectively improves safety of the vehicle, but also improves robustness of the unmanned system. However, there is a disadvantage that it is impossible to make the autonomous vehicle system take corresponding emergency measures quickly according to the specific fault levels to ensure the driving safety of the autonomous vehicle in the case of abnormity of the autonomous vehicle system.

### SUMMARY OF THE INVENTION

Therefore, it is an object of the present disclosure to provide a method and a system for real-time and reliable autonomous vehicle fault diagnosis and protection, thereby monitoring a fault situation during the operation of various software and hardware modules of an autonomous vehicle system in real time, and taking emergency measures to ensure the driving safety of the autonomous vehicle in the case of abnormity of the autonomous vehicle system.

In order to attain the object of the present disclosure, the present disclosure provides the following technical solutions.

In a first aspect, the present invention provides a method for real-time and reliable autonomous vehicle fault diagnosis and protection as defined in claim 1.

In a second aspect, the present invention provides a system for real-time and reliable autonomous vehicle fault diagnosis and protection, as defined in claim 3.

In comparison with the prior art, the present disclosure achieves the following technical effects:

With the fault diagnosis system including software and hardware according to the present disclosure, the operation situations of the autonomous vehicle software system and the vehicle hardware equipment can be monitored, and moreover the fault handling information of the vehicle can be rapidly sent to the vehicle control unit, thereby ensuring that the security measures can be quickly taken in the case of an emergency of the vehicle.

Additionally, according to the software and hardware-based self-diagnosis method of the present disclosure, real-time safety of an autonomous vehicle can be ensured, and the load of the fault information analyzing module can be balanced; further, the fault information can be stored locally and uploaded to a remote server for the purpose of checking and analyzing a fault by a professional staff conveniently and providing necessary system performance information for the optimization of the autonomous driving algorithm module.

### BRIEF DESCRIPTION OF THE DRAWINGS

Fig. 1 illustrates a flow chart of a method for real-time and reliable autonomous vehicle fault diagnosis and protection according to an embodiment of the present disclosure;
Fig. 2 illustrates a flow chart of the fault diagnosis of each functional module according to an embodiment of the present disclosure; and
Fig. 3 illustrates a structural diagram of a system for real-time and reliable autonomous vehicle fault diagnosis and protection according to an embodiment of the present disclosure.

### DETAILED DESCRIPTION OF THE EMBODIMENTS

Hereinafter, the present disclosure will be further illustrated in detail in conjunction with the accompanying drawings and specific embodiments. It should be understood that, the specific embodiments described herein are merely used for construing, rather than limiting, the disclosure.

It should be noted that, the terminology used herein is for the purpose of describing particular embodiments and is not intended to limit the illustrative embodiments. As used herein, the singular forms "a," "an," and "the" include plural referents, unless the context clearly indicates otherwise. Moreover, it should be also noted that, the terms "comprises", "comprising", "includes" and/or "including", when used in this specification, specify the presence of the stated features, steps, operations, elements or modules, components, and/or combinations thereof.

It should be noted that, in the absence of conflicts, the embodiments of the disclosure and the features in the embodiments may be combined with each other.

### Embodiment 1

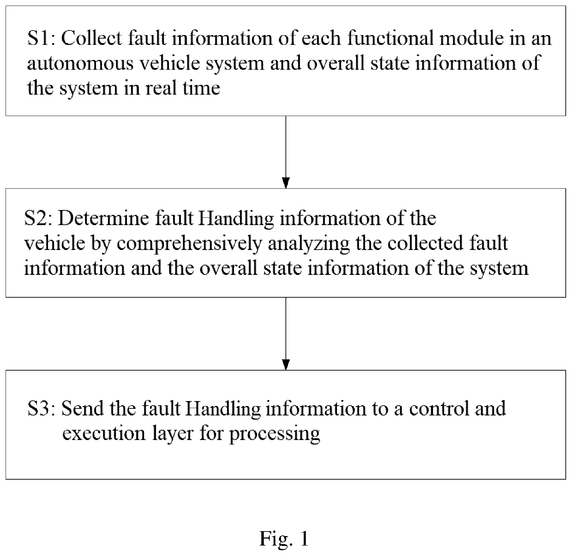

An embodiment of the disclosure provides a method for real-time and reliable autonomous vehicle fault diagnosis and protection. As shown in Fig. 1, the method includes the following steps S1 to S3.

In Step S1, fault information of at least one functional module in an autonomous vehicle system and overall state information of the autonomous vehicle system are acquired in real time.

Herein, in this embodiment, operation situations of an Autonomous Vehicle Operation System (AVOS) and a vehicle hardware controller may be monitored, and the main monitored objects include core algorithm modules, various sensor modules and vehicle control modules, but the embodiment is not limited thereto. Herein, the core algorithm modules include a perception module, a positioning module, a decision module and a control module. The perception module and the positioning module may acquire the required information based on a sensor fusion technology, and the decision module can make a behavior decision, path planning and movement planning according to the driving-scenario cognition-based posture information of the vehicle provided by the perception module and the positioning module, and download the planned information to a vertical and horizontal coordination control system of the vehicle, thereby accomplishing the autonomous driving function of the vehicle through an execution mechanism of the vehicle. A background monitoring module may be further provided for functions such as reading of data and setting of an overall path.

Herein, the fault information of the functional module in step S1 refers to diagnosis information resulting from the fault diagnosis performed by the functional module, and the overall state information of the autonomous vehicle system in step S1 refers to system state information acquired from the core of the system, including CPU usage by each software process node of the various functional modules, total memory usage of the system, etc.

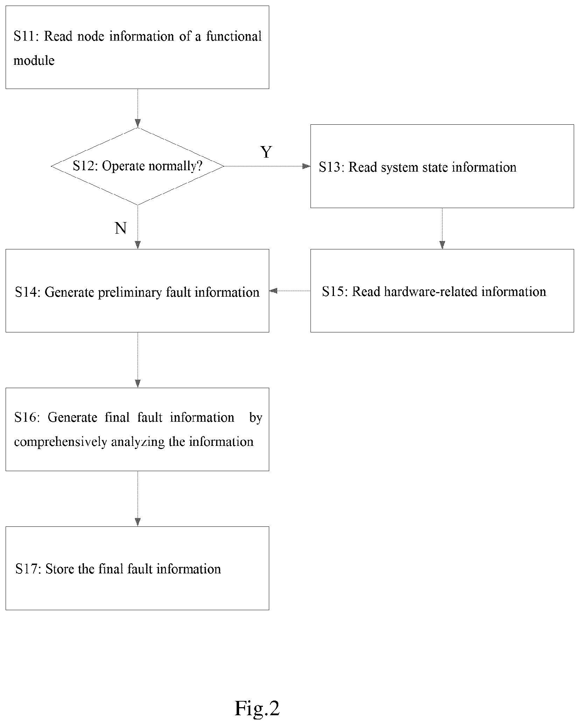

As shown in Fig. 2, each functional module may perform its corresponding fault diagnosis by steps S11 to S17 below.

In step S11, information of each software process node of the functional module is read.

In step S12, it is determined from the information as read in step S11 whether the software process node operates normally; and if it is determined that the software process node operates normally, step S13 is performed; otherwise, step S14 is performed.

In step S13, system state information of the software process node is read, and then step S15 is performed.

In step S14, preliminary fault information is generated, and then step S16 is performed.

In step S15, hardware-related information of the functional module is read, and then step S14 is performed.

In step S16, final fault information is generated from comprehensive analysis of the above information, particularly, the final fault information may be generated from the system state information of the software process node as read in step S13 and the hardware-related information as read in step S15. The final fault information may be used for classifying the faults of the functional module, for example, into three levels including a high level, a medium level and a low level.

In step S17, the final fault information is stored.

Each functional module may take the generated final fault information as its reported fault information. Further, a system fault level may be defined by the fault levels of the various functional modules.

In step S2, fault handling information of the vehicle (i.e. of the whole vehicle) is determined from comprehensively analyzing the acquired fault information and the overall state information of the autonomous vehicle system.

In step S3, the fault handling information is sent to a control and execution layer of the vehicle for processing.

Herein, the fault handling information is used for classifying faults of the functional module, into three levels including a high level, a medium level and a low level.

Herein, when the fault level is determined as the high level, after the control and execution layer acquires the fault handling information, the lower-layer vehicle controller executes an emergency stop instruction to stop the vehicle.

When the fault level is determined as the medium level, the control and execution layer controls the vehicle to slow down after acquiring the fault handling information.

When the fault level is determined as the low level, the control and execution layer takes no action specific to the fault handling information after acquiring the fault handling information.

In Step S3, in addition to the processing according to the fault handling information, the fault information of each functional module and the overall state information of the autonomous vehicle system are also stored locally and uploaded to a cloud server. In this embodiment, the fault information is stored locally and uploaded to the cloud server, for the purpose of checking and analyzing a fault by a professional staff conveniently, and providing necessary system performance information for the optimization of the autonomous driving algorithm module.

Additionally, with the use of the fault diagnosis system including software and hardware in the present disclosure, the operation situations of the autonomous vehicle software system and the vehicle hardware equipment can be monitored, and moreover the fault handling information of the vehicle can be rapidly sent to the vehicle control unit, thereby ensuring that the security measures can be quickly taken in the case of an emergency of the vehicle.

Additionally, according to the software and hardware-based self-diagnosis method of the present disclosure, real-time safety of an autonomous vehicle can be ensured, and the load of the fault information analyzing module can be balanced.

### Embodiment 2

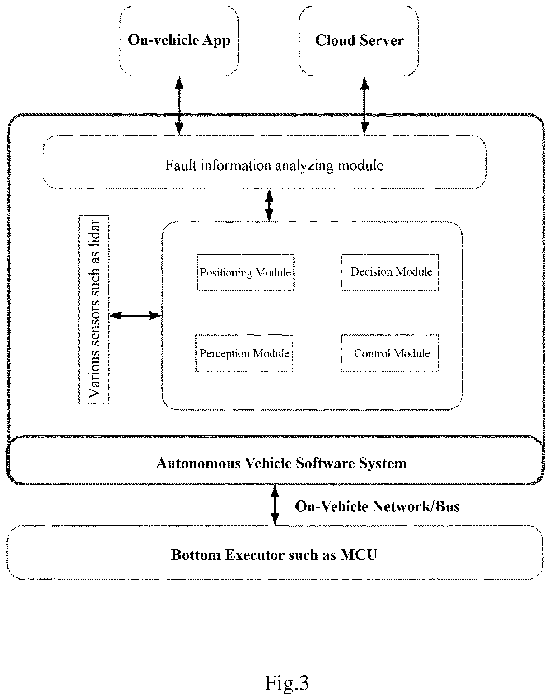

Corresponding to the method provided in the above embodiment, an embodiment of the disclosure provides a system for real-time and reliable autonomous vehicle fault diagnosis and protection. As shown in Fig. 3, the system includes: a fault information acquiring module, a fault information analyzing module and a fault information processing module.

The fault information acquiring module is configured for acquiring fault information of at least one functional module in an autonomous vehicle system in real time and sending the acquired fault information to the fault information analyzing module.

The fault information analyzing module is configured for receiving fault information of the functional module, acquiring overall state information of the autonomous vehicle system, and comprehensively analyzing the fault information of the functional module and the overall state information of the autonomous vehicle system, to determine the fault handling information of the vehicle.

Herein, the fault handling information is used for classifying faults of the functional modules, into three levels, i.e. a high level, a medium level and a low level.

When the fault level is determined as the high level, after the control and execution layer acquires the fault handling information, the lower-layer vehicle controller executes an emergency stop instruction to stop the vehicle.

When the fault level is determined as the medium level, the control and execution layer controls the vehicle to slow down after acquiring the fault handling information.

When the fault level is determined as the low level, the control and execution layer takes no action specific to the fault handling information after acquiring the fault handling information.

The fault information processing module is configured for sending the fault handling information to a control and execution layer of the vehicle for processing. The functional modules include core algorithm modules, various sensor modules and a vehicle control module, where the core algorithm modules include a perception module, a positioning module, a decision module and a control module.

In a preferred embodiment, the fault information of the functional module is the diagnosis information resulting from the fault diagnosis performed by the functional module. The method of performing the respective fault diagnosis of the functional module is the same as that in Embodiment 1.

According to the invention, the fault information processing module is further configured for storing locally and uploading to a cloud server the fault information of each functional module and the overall state information of the autonomous vehicle system.

It should be noted that, this system may be present in the form of a third-party software, which does not act too much to execute control instructions, but sends fault levels to the control layer and the vehicle execution layer. When the system detects an emergency situation requiring for emergency stop of the vehicle, the execution layer communicating with the system can execute an emergency stop instruction immediately after receiving the fault level. All fault handling information may be uploaded to the service layer, which may in turn forward the fault handling information to the cloud server where further processing may be carried out on the system according to the fault situation, for example by system recovery, parallel driving or on-site treatment by human, thereby ensuring the safety of the autonomous vehicle.

It should be further noted by one skilled in the art that, the units and algorithm steps of each example described in conjunction with the embodiments disclosed herein can be implemented by electronic hardware, computer software or a combination thereof. In order to clearly illustrate the interchangeability between the hardware and the software, the components and steps of each example have been described generally according to their functions. It depends on the specific application of the technical solution and the design constraints whether these functions are implemented in a hardware mode or a software mode. Those skilled in the art may use a different method for each specific application to realize the function described, and such implementation should not be regarded as departing from the scope of the disclosure.

The steps of the method or algorithm described in conjunction with the embodiments disclosed herein may be implemented by hardware or a software module executed by a processor or a combination thereof. The software module may be provided in a random-access memory (RAM), a memory, a read-only memory (ROM), an electrically-programmable ROM, an electrically-erasable programmable ROM, a register, a hard disk, a removable disk, a CD-ROM or a storage medium of any other forms well-known in the art.

The objects, technical solutions and technical effects of the disclosure have been illustrated in detail in the above specific embodiments. It should be understood that, the above description only describes specific embodiments of the disclosure, rather than limiting the protection scope of the disclosure, and the invention is set out in the appended set of claims.

## Claims

1. A method for autonomous vehicle fault diagnosis and protection for an autonomous vehicle system, comprising steps of:
S 1: acquiring fault information of at least one functional module in an autonomous vehicle system for an autonomous vehicle and overall state information of the autonomous vehicle system in real time;
S2: determining fault handling information of the vehicle by comprehensively analyzing the acquired fault information and the overall state information of the autonomous vehicle system; and
S3: sending the fault handling information to a control and execution layer of the vehicle for processing,
wherein, the overall state information of the autonomous vehicle system in step S1 is system state information acquired from an inner core of the autonomous vehicle system,
the fault handling information in step S2 is used for classifying faults of the at least one functional module into three fault levels including a high level, a medium level and a low level,
when the fault level is determined as the high level, a lower-layer vehicle controller executes an emergency stop instruction to stop the vehicle after the control and execution layer acquires the fault handling information,
when the fault level is determined as the medium level, the control and execution layer controls the vehicle to slow down after acquiring the fault handling information,
wherein
the at least one functional module in step S1 comprises core algorithm modules, sensor modules and a vehicle control module, the core algorithm modules comprise a perception module, a positioning module, a decision module and a control module,
when the fault level is determined as the low level, the control and execution layer takes no action specific to the fault handling information after acquiring the fault handling information, and
step S3 further comprises storing locally and uploading to a cloud server the fault information of the at least one functional module and the overall state information of the autonomous vehicle system.

2. The method of claim 1, wherein:
the fault information of the at least one functional module acquired in step S1 is diagnosis information resulting from fault diagnosis performed by the at least one functional module.

3. A system for autonomous vehicle fault diagnosis and protection for an autonomous vehicle system, comprising: a fault information acquiring module, a fault information analyzing module and a fault information processing module;
the fault information acquiring module is configured for acquiring fault information of at least one functional module in the autonomous vehicle system in real time and sending the acquired fault information to the fault information analyzing module, the at least one functional module comprises core algorithm modules, sensor modules and a vehicle control module, and the core algorithm modules comprise a perception module, a positioning module, a decision module and a control module;
the fault information analyzing module is configured for receiving the fault information of the at least one functional module, acquiring overall state information of the autonomous vehicle system, and comprehensively analyzing the fault information of the at least one functional module and the overall state information of the autonomous vehicle system to determine fault handling information of the vehicle;
the fault information processing module is configured for sending the fault handling information to a control and execution layer of the vehicle for processing and storing locally and uploading to a cloud server the fault information of the at least one functional module and the overall state information of the autonomous vehicle system,
wherein, the overall state information of the autonomous vehicle system is system state information acquired from an inner core of the autonomous vehicle system,
the fault handling information is used for classifying faults of the at least one functional module into three fault levels including a high level, a medium level and a low level,
when the fault level is determined as the high level, a lower-layer vehicle controller is configured to execute an emergency stop instruction to stop the vehicle after the control and execution layer acquires the fault handling information,
when the fault level is determined as the medium level, the control and execution layer is configured to control the vehicle to slow down after acquiring the fault handling information, and
when the fault level is determined as the low level, the control and execution layer is configured to take no action specific to the fault handling information after acquiring the fault handling information.

4. The system of claim 3, wherein:
the fault information of the at least one functional module in the autonomous vehicle system is diagnosis information resulting from fault diagnosis performed by the at least one functional module.

## Patentansprüche

1. Verfahren zur Fehlerdiagnose und zum Schutz von autonomen Fahrzeugen für ein autonomes Fahrzeugsystem, die folgenden Schritte umfassend:
S 1: Erfassen von Fehlerinformationen von mindestens einem Funktionsmodul in einem autonomen Fahrzeugsystem für ein autonomes Fahrzeug und von Gesamtzustandsinformationen des autonomen Fahrzeugsystems in Echtzeit;
S2: Bestimmen von Fehlerbehandlungsinformationen des Fahrzeugs durch umfassendes Analysieren der erfassten Fehlerinformationen und der Gesamtzustandsinformationen des autonomen Fahrzeugsystems; und
S3: Senden der Fehlerbehandlungsinformationen an eine Steuer- und Ausführschicht des Fahrzeugs zur Verarbeitung,
wobei die Gesamtzustandsinformationen des autonomen Fahrzeugsystems in Schritt S1 Systemzustandsinformationen sind, die von einem inneren Kern des autonomen Fahrzeugsystems erfasst werden,
die Fehlerbehandlungsinformationen in Schritt S2 zum Einstufen von Fehlern des mindestens einen Funktionsmoduls in drei Fehlerlevel verwendet wird, einschließlich eines hohen Levels, eines mittleren Levels und eines niedrigen Levels,
wenn das Fehlerlevel als das hohe Level bestimmt wird, eine Fahrzeugsteuerung der unteren Schicht eine Nothaltanweisung zum Anhalten des Fahrzeugs ausführt, nachdem die Steuer- und Ausführschicht die Fehlerbehandlungsinformationen erfasst hat,
wenn das Fehlerlevel als das mittlere Level bestimmt wird, die Steuer- und Ausführschicht das Fahrzeug derart steuert, dass es sich verlangsamt, nachdem die Fehlerbehandlungsinformationen erfasst wurden,
wobei das mindestens eine Funktionsmodul in Schritt S1 Kernalgorithmusmodule, Sensormodule und ein Fahrzeugsteuermodul umfasst, die Kernalgorithmusmodule ein Wahrnehmungsmodul, ein Positionierungsmodul, ein Entscheidungsmodul und ein Steuermodul umfassen,
wenn das Fehlerlevel als das niedrige Level bestimmt wird, die Steuer- und Ausführschicht keine Maßnahme ergreift, die für die Fehlerbehandlungsinformationen spezifisch sind, nachdem die Fehlerbehandlungsinformationen erfasst wurden, und
Schritt S3 ferner lokales Speichern und Hochladen der Fehlerinformationen des mindestens einen Funktionsmoduls und der Gesamtzustandsinformationen des autonomen Fahrzeugsystems auf einen Cloud-Server umfasst.

2. Verfahren nach Anspruch 1, wobei:
die Fehlerinformationen des mindestens einen Funktionsmoduls, die in Schritt S1 erfasst wurden, Diagnoseinformationen sind, die aus der Fehlerdiagnose resultieren, die von dem mindestens einen Funktionsmodul durchgeführt werden.

3. System zur Fehlerdiagnose und zum Schutz von autonomen Fahrzeugen für ein autonomes Fahrzeugsystem, umfassend: ein Fehlerinformationserfassungsmodul, ein Fehlerinformationsanalysemodul und ein Fehlerinformationsverarbeitungsmodul;
wobei das Fehlerinformationserfassungsmodul dazu konfiguriert ist, Fehlerinformationen von mindestens einem Funktionsmodul in dem autonomen Fahrzeugsystem in Echtzeit zu erfassen und die erfassten Fehlerinformationen an das Fehlerinformationsanalysemodul zu senden, das mindestens eine Funktionsmodul Kernalgorithmusmodule, Sensormodule und ein Fahrzeugsteuermodul umfasst und die Kernalgorithmusmodule ein Wahrnehmungsmodul, ein Positionierungsmodul, ein Entscheidungsmodul und ein Steuermodul umfassen;
das Fehlerinformationsanalysemodul dazu konfiguriert ist, die Fehlerinformationen des mindestens einen Funktionsmoduls zu empfangen, Gesamtzustandsinformationen des autonomen Fahrzeugsystems zu erfassen und die Fehlerinformationen des mindestens einen Funktionsmoduls und die Gesamtzustandsinformationen des autonomen Fahrzeugsystems umfassend zu analysieren, um Fehlerbehandlungsinformationen des Fahrzeugs zu bestimmen;
das Fehlerinformationsverarbeitungsmodul dazu konfiguriert ist, die Fehlerbehandlungsinformationen an eine Steuer- und Ausführschicht des Fahrzeugs zum Verarbeiten und lokalen Speichern und Hochladen der Fehlerinformationen des mindestens einen Funktionsmoduls und der Gesamtzustandsinformationen des autonomen Fahrzeugsystems auf einen Cloud-Server zu senden,
die Gesamtzustandsinformationen des autonomen Fahrzeugsystems Systemzustandsinformationen sind, die von einem inneren Kern des autonomen Fahrzeugsystems erfasst werden,
die Fehlerbehandlungsinformationen zum Einstufen von Fehlern des mindestens einen Funktionsmoduls in drei Fehlerlevel verwendet wird, einschließlich eines hohen Levels, eines mittleren Levels und eines niedrigen Levels,
wenn das Fehlerlevel als das hohe Level bestimmt wird, eine Fahrzeugsteuerung der unteren Schicht dazu konfiguriert ist, eine Nothaltanweisung zum Anhalten des Fahrzeugs auszuführen, nachdem die Steuer- und Ausführschicht die Fehlerbehandlungsinformationen erfasst hat,
wenn das Fehlerlevel als das mittlere Level bestimmt wird, die Steuer- und Ausführschicht dazu konfiguriert ist, das Fahrzeug derart zu steuern, dass es sich verlangsamt, nachdem die Fehlerbehandlungsinformationen erfasst wurden, und
wenn das Fehlerlevel als das niedrige Level bestimmt wird, die Steuer- und Ausführschicht dazu konfiguriert ist, keine Maßnahme zu ergreifen, die für die Fehlerbehandlungsinformationen spezifisch sind, nachdem die Fehlerbehandlungsinformationen erfasst wurden.

4. System nach Anspruch 3, wobei:
die Fehlerinformationen des mindestens einen Funktionsmoduls in dem autonomen Fahrzeugsystem Diagnoseinformationen sind, die aus der Fehlerdiagnose resultieren, die von dem mindestens einen Funktionsmodul durchgeführt wird.

## Revendications

1. Procédé de diagnostic de défaut et de protection de véhicule autonome pour un système de véhicule autonome, comprenant les étapes de :
S1 : acquisition d'une information de défaut d'au moins un module fonctionnel dans un système de véhicule autonome pour un véhicule autonome et d'une information d'état global du système de véhicule autonome en temps réel ;
S2 : détermination d'une information de gestion de défauts du véhicule en analysant de manière exhaustive l'information de défaut acquise et l'information d'état global du système de véhicule autonome ; et
S3 : envoi de l'information de gestion de défauts à une couche de commande et d'exécution du véhicule pour traitement,
dans lequel, l'information d'état global du système de véhicule autonome à l'étape S1 est une information d'état de système acquise à partir d'un noyau interne du système de véhicule autonome,
l'information de gestion de défauts à l'étape S2 est utilisée pour classer des défauts de l'au moins un module fonctionnel en trois niveaux de défaut incluant un niveau élevé, un niveau moyen et un niveau faible,
lorsque le niveau de défaut est déterminé comme étant le niveau élevé, un dispositif de commande de véhicule de couche inférieure exécute une instruction d'arrêt d'urgence pour arrêter le véhicule après que la couche de commande et d'exécution a acquis l'information de gestion de défauts,
lorsque le niveau de défaut est déterminé comme étant le niveau moyen, la couche de commande et d'exécution commande le véhicule pour qu'il ralentisse après avoir acquis l'information de gestion de défauts,
dans lequel
l'au moins un module fonctionnel à l'étape S1 comprend des modules d'algorithme de base, des modules de capteur et un module de commande de véhicule, les modules d'algorithme de base comprenant un module de perception, un module de positionnement, un module de décision et un module de commande,
lorsque le niveau de défaut est déterminé comme étant le niveau faible, la couche de commande et d'exécution n'entreprend aucune action spécifique à l'information de gestion de défauts après avoir acquis l'information de gestion de défauts, et
l'étape S3 comprend en outre le stockage local et le téléversement vers un serveur en nuage de l'information de défaut de l'au moins un module fonctionnel et de l'information d'état global du système de véhicule autonome.

2. Procédé selon la revendication 1, dans lequel :
l'information de défaut de l'au moins un module fonctionnel acquise à l'étape S1 est une information de diagnostic résultant d'un diagnostic de défaut effectué par l'au moins un module fonctionnel.

3. Système de diagnostic de défaut et de protection de véhicule autonome pour un système de véhicule autonome, comprenant : un module d'acquisition d'information de défaut, un module d'analyse d'information de défaut et un module de traitement d'information de défaut ;
le module d'acquisition d'information de défaut est configuré pour acquérir une information de défaut d'au moins un module fonctionnel dans le système de véhicule autonome en temps réel et envoyer l'information de défaut acquise au module d'analyse d'information de défaut, l'au moins un module fonctionnel comprend des modules d'algorithme de base, des modules de capteur et un module de commande de véhicule, et les modules d'algorithme de base comprennent un module de perception, un module de positionnement, un module de décision et un module de commande ;
le module d'analyse d'information de défaut est configuré pour recevoir l'information de défaut de l'au moins un module fonctionnel, acquérir une information d'état global du système de véhicule autonome, et analyser de manière exhaustive l'information de défaut de l'au moins un module fonctionnel et l'information d'état global du système de véhicule autonome pour déterminer une information de gestion de défauts du véhicule ;
le module de traitement d'information de défaut est configuré pour envoyer l'information de gestion de défauts à une couche de commande et d'exécution du véhicule pour traiter et stocker localement et téléverser vers un serveur en nuage l'information de défaut de l'au moins un module fonctionnel et l'information d'état global du système de véhicule autonome,
dans lequel, l'information d'état global du système de véhicule autonome est une information d'état de système acquise à partir d'un noyau interne du système de véhicule autonome,
l'information de gestion de défauts est utilisée pour classer des défauts de l'au moins un module fonctionnel en trois niveaux de défaut incluant un niveau élevé, un niveau moyen et un niveau faible,
lorsque le niveau de défaut est déterminé comme étant le niveau élevé, un dispositif de commande de véhicule de couche inférieure est configuré pour exécuter une instruction d'arrêt d'urgence pour arrêter le véhicule après que la couche de commande et d'exécution a acquis l'information de gestion de défauts,
lorsque le niveau de défaut est déterminé comme étant le niveau moyen, la couche de commande et d'exécution est configurée pour commander le véhicule pour qu'il ralentisse après avoir acquis l'information de gestion de défauts, et
lorsque le niveau de défaut est déterminé comme étant le niveau faible, la couche de commande et d'exécution est configurée pour n'entreprendre aucune action spécifique à l'information de gestion de défauts après avoir acquis l'information de gestion de défauts.

4. Système selon la revendication 3, dans lequel :
l'information de défaut de l'au moins un module fonctionnel du système de véhicule autonome est une information de diagnostic résultant d'un diagnostic de défaut effectué par l'au moins un module fonctionnel.
